(19) **Europäisches Patentamt / European Patent Office / Office européen des brevets**

(11) **EP 2 731 391 A1**

(12) **EUROPEAN PATENT APPLICATION**
published in accordance with Art. 153(4) EPC

(43) Date of publication:
**14.05.2014 Bulletin 2014/20**

(21) Application number: **12821895.5**

(22) Date of filing: **23.07.2012**

(51) Int Cl.:
**H04W 72/04** (2009.01)   **H04W 8/22** (2009.01)

(86) International application number:
**PCT/CN2012/079007**

(87) International publication number:
**WO 2013/020447 (14.02.2013 Gazette 2013/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.08.2011   CN 201110229754**

(71) Applicant: **Huawei Technologies Co., Ltd**
**Shenzhen, Guangdong 518129 (CN)**

(72) Inventors:
• **GUO, Xuanyu**
**Shenzhen**
**Guangdong 518129 (CN)**

• **HE, Chuanfeng**
**Shenzhen**
**Guangdong 518129 (CN)**
• **LI, Bingzhao**
**Shenzhen**
**Guangdong 518129 (CN)**
• **CHEN, Yanyan**
**Shenzhen**
**Guangdong 518129 (CN)**

(74) Representative: **Epping - Hermann - Fischer**
**Patentanwaltsgesellschaft mbH**
**Schloßschmidstraße 5**
**80639 München (DE)**

(54) **PRECODING CONTROL INDICATION FEEDBACK CHANNEL CONFIGURATION METHOD AND DEVICE**

(57)    The present invention discloses a method and an apparatus for configuring a precoding control indication feedback channel and belongs to the field of wireless communications. The method includes: acquiring, by a base station, a precoding control indication (PCI) feedback channel(s) configured by a base station controller; selecting, by the base station, a PCI feedback channel from the configured PCI feedback channel(s) according to an uplink closed-loop transmit diversity (UL CLTD) capability reported by a terminal; and sending, by the base station, configuration information of the selected PCI feedback channel to the terminal. The present invention provides, by using the foregoing solutions, a method for configuring a precoding control indication feedback channel.

A base station acquires a precoding control indication (PCI) feedback channel configured by a base station controller — S11

The base station selects a PCI feedback channel from the configured PCI feedback channel according to a UL CLTD capability reported by a terminal — S12

The base station sends configuration information of the selected PCI feedback channel to the terminal — S13

FIG. 1-a

EP 2 731 391 A1

A terminal reports a UL CLTD capability to a base station, so that the base station selects, according to the UL CLTD capability, a PCI feedback channel from a PCI feedback channel configured by a base station controller — S21

The terminal receives configuration information of the selected PCI feedback channel, where the configuration information is sent by the base station — S22

FIG. 1-b

**Description**

This application claims priority to Chinese Patent Application No. 201110229754.0, filed with the Chinese Patent Office on August 11, 2011 and entitled "METHOD AND APPARATUS FOR CONFIGURING PRECODING CONTROL INDICATION FEEDBACK CHANNEL", which is incorporated herein by reference in its entirety.

**TECHNICAL FIELD**

The present invention relates to the field of wireless communications, and in particular, to a method and an apparatus for configuring a precoding control indication feedback channel.

**BACKGROUND**

An uplink transmit diversity technology can reduce transmit power of a terminal, improve edge coverage, and improve a cell capacity, and can improve a service transmission rate of a cell edge user, thereby improving user experience.

In an uplink transmit diversity, a Node B (base station) needs to feed back PCI (Precoding Control Indication, precoding control indication) information to a UE (User Equipment, user equipment). For a discussion that an existing F-DPCH (Fraction-Dedicated Physical Channel, fractional dedicated physical channel) may be used as a PCI feedback channel or a newly established F-PCICH (Fragment Precoding Control Indication Channel, fragment precoding control indication channel) channel may be used as the PCI feedback channel, a consensus about related standards has been reached currently: The newly established F-PCICH channel is used as the PCI feedback channel.

However, there is still no corresponding solution currently for how to configure the PCI feedback channel.

**SUMMARY**

To configure a PCI feedback channel, embodiments of the present invention provide a method and an apparatus for configuring a precoding control indication feedback channel.

One aspect of the present invention provides a method for configuring a precoding control indication feedback channel, including: acquiring, by a base station, a precoding control indication (PCI) feedback channel(s) configured by a base station controller; selecting, by the base station, a PCI feedback channel from the configured PCI feedback channel(s) according to an uplink closed-loop transmit diversity (UL CLTD) capability reported by a terminal; and sending, by the base station, configuration information of the selected PCI feedback channel to the terminal.

Another aspect of the present invention provides a method for configuring a precoding control indication feedback channel, including: reporting, by a terminal, an uplink closed-loop transmit diversity (UL CLTD) capability to a base station, so that the base station selects, according to the UL CLTD capability, a PCI feedback channel from a precoding control indication (PCI) feedback channel(s) configured by a base station controller; and receiving, by the terminal, configuration information of the selected PCI feedback channel, where the configuration information is sent by the base station.

Another aspect of the present invention provides a method for configuring a precoding control indication feedback channel, including: configuring, by a base station controller, common enhanced dedicated channel (E-DCH) resource and a precoding control indication (PCI) feedback channel for a terminal; and adding, by the base station controller, the common E-DCH resource and configuration information of the PCI feedback channel into system broadcast information, and broadcasting the system broadcast information to the terminal.

Another aspect of the present invention provides a method for configuring a precoding control indication feedback channel, including: receiving, by a terminal, system broadcast information broadcast by a base station controller, where the system broadcast information carries common E-DCH resource and configuration information of a PCI feedback channel, and the common E-DCH resource and the PCI feedback channel are configured by the base station controller for the terminal.

Another aspect of the present invention provides a method for configuring a precoding control indication feedback channel, including: allocating, by a base station, a precoding control indication (PCI) feedback channel to a terminal over an enhanced acknowledgment indicator channel (E-AICH) or an acknowledgment indicator channel (AICH); receiving, by the base station, uplink data sent by the terminal; determining, by the base station according to the uplink data, whether the terminal has an uplink closed-loop transmit diversity (UL CLTD) capability; and if the terminal has the UL CLTD capability, sending, by the base station, absolute grant (AG) information whose mask is an enhanced dedicated channel radio network temporary identifier (E-RNTI) of the terminal to the terminal, and sending data to the terminal over the PCI feedback channel.

Another aspect of the present invention provides a base station, including: an acquiring module, configured to acquire a precoding control indication (PCI) feedback channel(s) configured by a base station controller; a configuring module, configured to select a PCI feedback channel from the configured PCI feedback channel(s) according to an uplink closed-loop transmit diversity (UL CLTD) capability reported by a terminal; and a sending module, configured to send configuration information of the selected PCI feedback channel to the terminal.

Another aspect of the present invention provides a terminal, including: a sending module, configured to report an uplink closed-loop transmit diversity (UL CLTD) capability to a base station, so that the base station selects, according to the UL CLTD capability, a PCI feedback channel from a precoding control indication (PCI) feedback channel(s) configured by a base station controller; and a receiving module, configured to receive configuration information of the selected PCI feedback channel, where the configuration information is sent by the base station.

Another aspect of the present invention provides a base station controller, including: a configuring module, configured to configure common enhanced dedicated channel (E-DCH) resource and a precoding control indication (PCI) feedback channel for a terminal; and a sending module, configured to add the common E-DCH resource and configuration information of the PCI feedback channel into system broadcast information, and broadcast the system broadcast information to the terminal.

Another aspect of the present invention provides a terminal, including: a receiving module, configured to receive system broadcast information broadcast by a base station controller, where the system broadcast information carries common E-DCH resource and configuration information of a PCI feedback channel, and the common E-DCH resource and the PCI feedback channel are configured by the base station controller for the terminal.

Another aspect of the present invention provides a base station, including: a configuring module, configured to allocate a precoding control indication (PCI) feedback channel to a terminal over an enhanced acknowledgment indicator channel (E-AICH) or an acknowledgment indicator channel (AICH); a receiving module, configured to receive uplink data sent by the terminal; a determining module, configured to determine, according to the uplink data, whether the terminal has an uplink closed-loop transmit diversity (UL CLTD) capability; and a sending module, configured to: if the terminal has the UL CLTD capability, send absolute grant (AG) information whose mask is an enhanced dedicated channel radio network temporary identifier (E-RNTI) of the terminal to the terminal, and send data to the terminal over the PCI feedback channel.

The beneficial effect of the technical solutions provided in the embodiments of the present invention is as follows: A method for configuring a precoding control indication feedback channel is provided.

**BRIEF DESCRIPTION OF DRAWINGS**

To describe the technical solutions in the embodiments of the present invention more clearly, the following briefly introduces the accompanying drawings required for describing the embodiments. Apparently, the accompanying drawings in the following description show merely some embodiments of the present invention, and persons of ordinary skill in the art may still derive other drawings from these accompanying drawings without creative efforts.

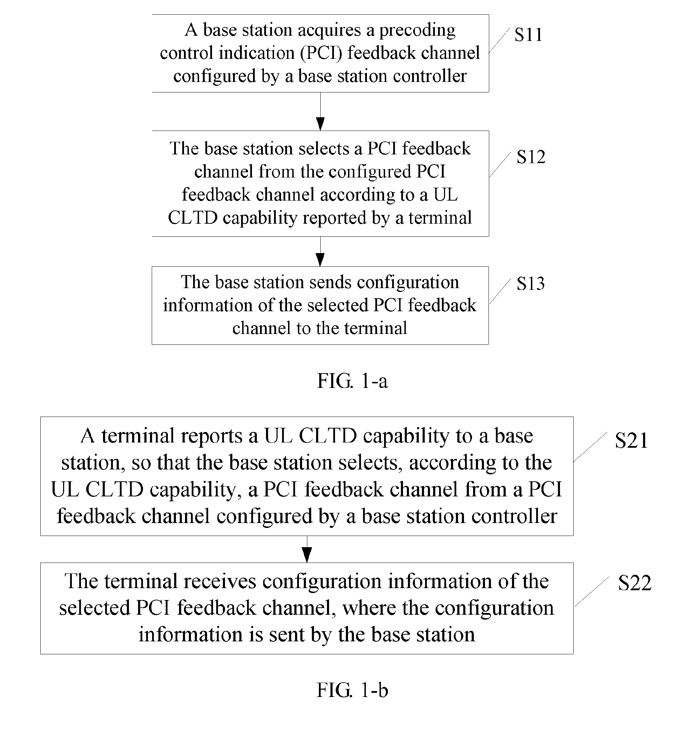

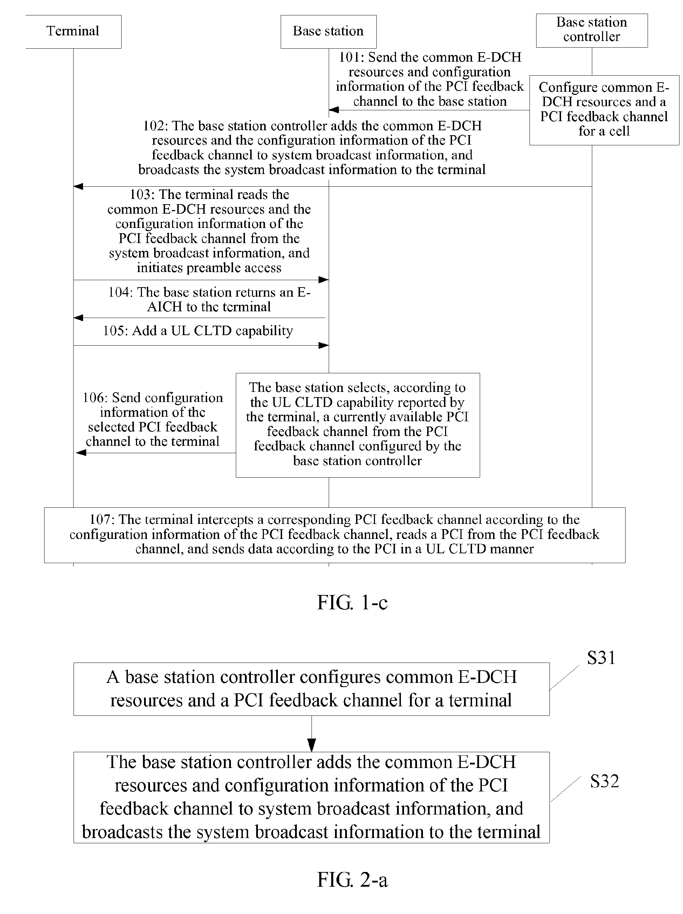

FIG. 1-a is a flowchart of a method for configuring a PCI feedback channel according to an embodiment of the present invention;

FIG. 1-b is a flowchart of a method for configuring a PCI feedback channel according to another embodiment of the present invention;

FIG. 1-c is an information exchange diagram of a method for configuring a PCI feedback channel according to another embodiment of the present invention;

FIG. 2-a is a flowchart of a method for configuring a PCI feedback channel according to another embodiment of the present invention;

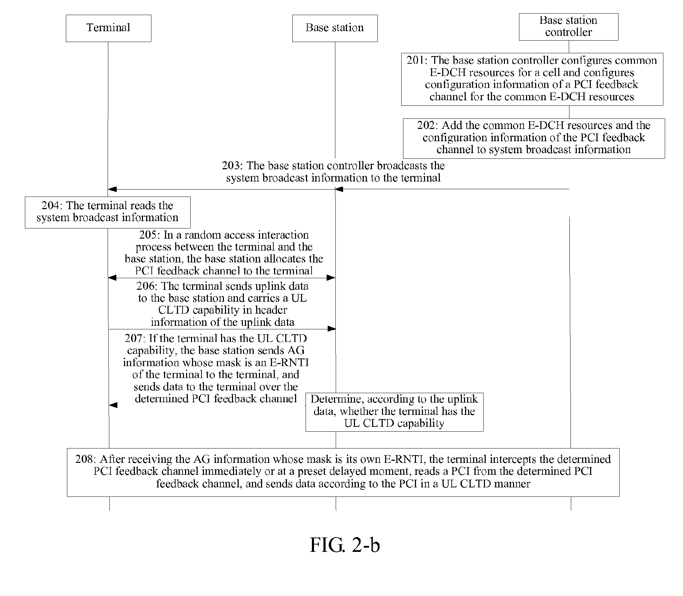

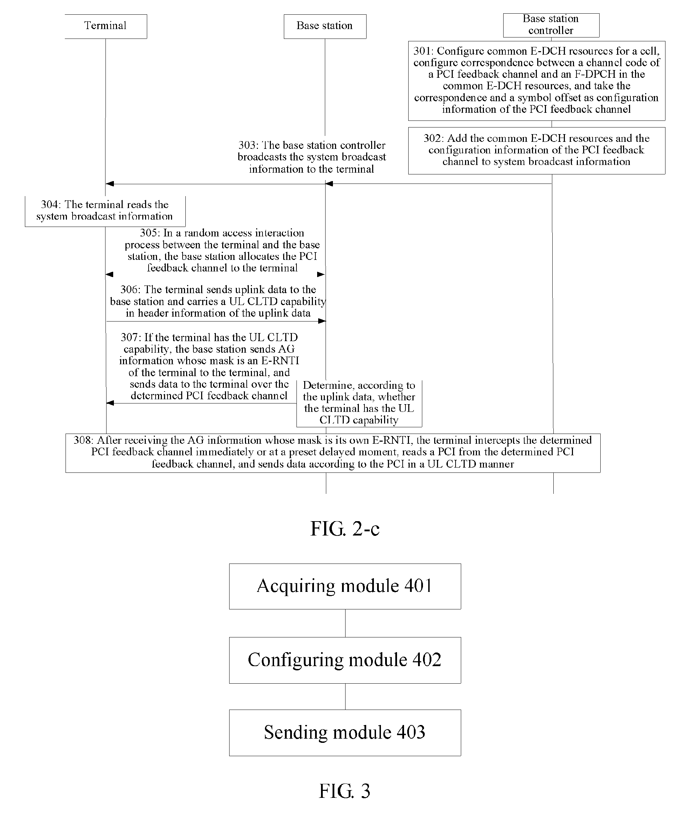

FIG. 2-b is a flowchart of a method for configuring a PCI feedback channel according to another embodiment of the present invention;

FIG. 2c is an information exchange diagram of a method for configuring a PCI feedback channel according to another embodiment of the present invention;

FIG. 3 is a schematic structural diagram of a base station according to another embodiment of the present invention;

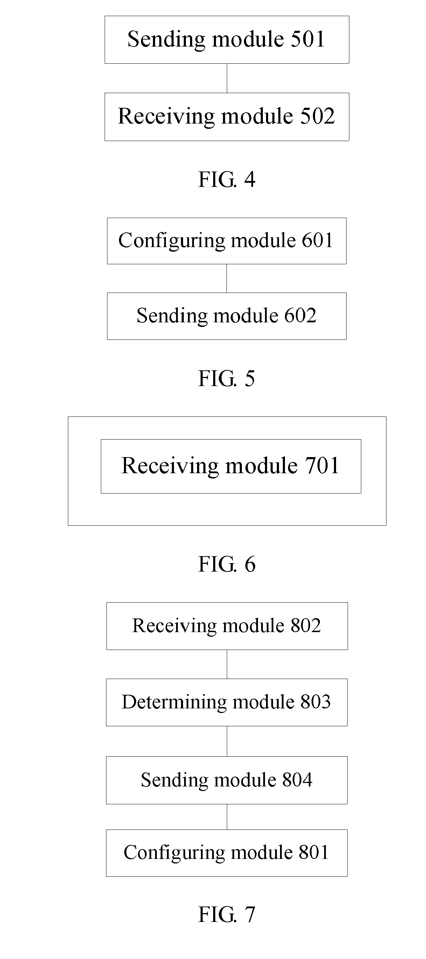

FIG. 4 is a schematic structural diagram of a terminal according to another embodiment of the present invention;

FIG. 5 is a schematic structural diagram of a base station controller according to another embodiment of the present invention;

FIG. 6 is a schematic structural diagram of a terminal according to another embodiment of the present invention; and

FIG. 7 is a schematic structural diagram of a base station according to another embodiment of the present invention.

## DESCRIPTION OF EMBODIMENTS

To make the objectives, technical solutions, and advantages of the present invention more comprehensible, the following further describes the embodiments of the present invention in detail with reference to the accompanying drawings.

Various technologies described in this specification may be applied to various wireless communications systems, for example, current 2G and 3G communications systems and a next-generation communications system, for example, a Global System for Mobile communications (GSM, Global System for Mobile communications), a Code Division Multiple Access (CDMA, Code Division Multiple Access) system, a Time Division Multiple Access (TDMA, Time Division Multiple Access) system, a Wideband Code Division Multiple Access (WCDMA, Wideband Code Division Multiple Access Wireless), a Frequency Division Multiple Access (FDMA, Frequency Division Multiple Addressing) system, an Orthogonal Frequency-Division Multiple Access (OFDMA, Orthogonal Frequency-Division Multiple Access) system, a single-carrier FDMA (SC-FDMA) system, a General Packet Radio Service (GPRS, General Packet Radio Service) system, a Long Term Evolution (LTE, Long Term Evolution) system, and other communications systems.

This specification describes various aspects in combination with a terminal, a base station, and/or a base station controller.

The terminal may be a wireless terminal or a wired terminal. The wireless terminal may be a device providing voice and/or data connectivity for a user, a handheld device having a wireless connection function, or another processing device connected to a wireless modem. The wireless terminal may communicate with one or more core networks through a radio access network (for example, RAN, Radio Access Network). The wireless terminal may be a mobile terminal, for example, a mobile phone (or called a "cellular" phone) or a computer equipped with a mobile terminal. For example, it may be a portable, pocket-sized, handheld, computer built-in, or vehicle-mounted mobile apparatus, which exchanges a language and/or data with the radio access network. For example, it may be a device such as a personal communication service (PCS, Personal Communication Service) phone, a cordless telephone set, a Session Initiation Protocol (SIP) phone, a wireless local loop (WLL, Wireless Local Loop) station, or a personal digital assistant (PDA, Personal Digital Assistant). The wireless terminal may also be called a system, a subscriber unit (Subscriber Unit), a subscriber station (Subscriber Station), a mobile station (Mobile Station), a mobile terminal (Mobile), a remote station (Remote Station), an access point (Access Point), a remote terminal (Remote Terminal), an access terminal (Access Terminal), a user terminal (User Terminal), a user agent (User Agent), a user device (User Device), or a user equipment (User Equipment).

The base station (for example, an access point) may be a device that communicates with the wireless terminal through one or more sectors on an air interface on an access network. The base station may be used to perform mutual conversion between a received air frame and an IP packet, acting as a router between the wireless terminal and another part of the access network, where the another part of the access network may include an Internet Protocol (IP) network. The base station may further coordinate attribute management on the air interface. For example, the base station may be a base station (BTS, Base Transceiver Station) in the GSM or CDMA, a base station (NodeB) in the WCDMA, or an evolved base station (NodeB, eNB, or e-NodeB, evolutional Node B) in the LTE, which is not limited in the present invention.

The base station controller may be a base station controller (BSC, base station controller) in the GSM or CDMA, or a radio network controller (RNC, Radio Network Controller) in the WCDMA, which is not limited in the present invention.

In addition, the terms "system" and "network" in this specification may be used interchangeably in this specification. The term "and/or" in this specification describes only an association between associated objects and represents that three relationships may exist. For example, A and/or B may represent the following three cases: Only A exists, both A and B exist, and only B exists. In addition, the symbol "/" in this specification generally represents that the associated objects before and after the symbol are in an "or" relationship.

As shown in FIG. 1-a, an embodiment of the present invention provides a method for configuring a PCI feedback channel. The method may be performed by a base station and the method includes:

S11: A base station acquires a precoding control indication (PCI) feedback channel(s) configured by a base station controller.

S12: The base station selects a PCI feedback channel from the configured PCI feedback channel(s) according to an uplink closed-loop transmit diversity (Uplink Closed Loop Transmission Diversity, UL CLTD) capability reported by a terminal.

S 13: The base station sends configuration information of the selected PCI feedback channel to the terminal.

The embodiment provides a method for configuring a PCI feedback channel; it is not necessary to pre-configure a PCI feedback channel for common E-DCH (Enhanced-Dedicated Channel, enhanced dedicated channel) resource, and instead, a base station controller allocates the PCI feedback channel; and when confirming that a terminal has a UL CLTD capability, a base station dynamically allocates a PCI feedback channel to the terminal, thereby saving downlink code resource.

As shown in FIG. 1-b, another embodiment of the present invention provides a method for configuring a PCI feedback channel. The method may be performed by a terminal and the method includes:

S21: A terminal reports an uplink closed-loop transmit diversity (UL CLTD) capability to a base station, so that the base station selects, according to the UL CLTD capability, a precoding control indication (PCI) feedback channel from a PCI feedback channel configured by a base station controller.

S22: The terminal receives configuration information of the selected PCI feedback channel, where the configuration information is sent by the base station.

The embodiment provides a method for configuring a PCI feedback channel; it is not necessary to pre-configure a PCI feedback channel for common E-DCH resource, and instead, a base station controller allocates the PCI feedback channel; and when confirming that a terminal has a UL CLTD capability, a base station dynamically allocates a PCI feedback channel to the terminal, thereby saving downlink code resource.

As shown in FIG. 1-c, another embodiment of the present invention provides a method for configuring a PCI feedback channel. The method includes:

101: A base station controller configures common E-DCH resource and a PCI feedback channel for a cell, and sends the common E-DCH resource and configuration information of the PCI feedback channel to a base station.

The configuration information of the PCI feedback channel at least includes: a channel code and a symbol offset of the PCI feedback channel, and may further include an index of the PCI feedback channel, where the index is corresponding to the channel code and the symbol offset of the PCI feedback channel. That is to say, the configuration information of the PCI feedback channel includes: the channel code and the symbol offset of the PCI feedback channel; or the configuration information of the PCI feedback channel includes: the channel code and the symbol offset of the PCI feedback channel and the index of the PCI feedback channel.

The PCI feedback channel is configured by the base station controller for a terminal in a cell forward access channel (CELL_FACH) state in the cell.

102: The base station controller adds the common E-DCH resource and the configuration information of the PCI feedback channel into system broadcast information, and broadcasts the system broadcast information to the terminal.

103: The terminal reads the common E-DCH resource and the configuration information of the PCI feedback channel from the broadcast system broadcast information, and initiates preamble (Preamble) access.

Alternatively, the terminal may obtain the configuration information of the PCI feedback channel from a DCCH (Dedicated Control Channel, dedicated control channel).

Further, when the configuration information of the PCI feedback channel includes: the channel code and the symbol offset of the PCI feedback channel and the index of the PCI feedback channel, the terminal further needs to store the configuration information of the PCI feedback channel. When the configuration information of the PCI feedback channel includes: the channel code and the symbol offset of the PCI feedback channel, the terminal may not store the configuration information of the PCI feedback channel, or may store the configuration information of the PCI feedback channel.

104: The base station returns an E-AICH (enhanced acknowledgment indicator channel) to the terminal.

105: After receiving the E-AICH, the terminal adds, according to its own UL CLTD capability, an E (E-DCH, enhanced dedicated channel)-RNTI (Radio Network Temporary Identifier, radio network temporary identifier) and the UL CLTD capability to a header of a MAC (Media Access Control, Media Access Control) PDU (Protocol Data Unit, protocol data unit).

For example, if the terminal supports a UL CLTD in the Cell_FACH (Cell Forward Access Channel, cell forward access channel) state, the terminal adds the UL CLTD capability. If the terminal does not support the UL CLTD in the Cell_FACH (Cell Forward Access Channel, cell forward access channel) state, the terminal does not add the UL CLTD capability. That is to say, the UL CLTD capability in the embodiment indicates that the terminal supports the UL CLTD in the Cell_FACH state.

A method for adding the UL CLTD capability may be: for example, modifying a reserve bit (reserve bit) in the header of the MAC PDU and defining a logical channel identifier (LrCH ID) to instruct the base station to read the reserve bit.

106: The base station selects, according to the UL CLTD capability reported by the terminal, a currently available PCI feedback channel from the PCI feedback channel configured by the base station controller, and sends configuration information of the selected PCI feedback channel to the terminal.

It should be noted that, the configuration information, which is sent by the base station, of the PCI feedback channel may be a channel code and a symbol offset of the PCI feedback channel or an index of the PCI feedback channel.

The PCI feedback channel configured by the base station controller may have one or more, for example, 1, 8, or 16, channel codes of the PCI feedback channel. When confirming that a terminal obtaining the common E-DCH resource is capable of using the UL CLTD, that is, when receiving the UL CLTD capability reported by the terminal, the base station dynamically allocates a PCI feedback channel to the terminal.

Specifically, two manners of sending, by the base station, the configuration information of the selected PCI feedback channel to the terminal may be as follows:

Manner 1: After receiving the UL CLTD capability reported by the terminal, the base station randomly allocates a channel code of a currently available PCI feedback channel from the PCI feedback channel to the terminal when collision detection succeeds, and carries a corresponding AG (Absolute Grant, absolute grant) index in an E-AGCH (E-DCH Absolute Grant Channel, E-DCH absolute grant channel) that is sent to the terminal, where an AG value corresponding to the AG index indicates an index of a PCI feedback channel allocated to a UE.

In another embodiment of the present invention, an E-AGCH may use an E-RNTI to perform CRC (Cyclic Redundancy Check, cyclic redundancy check) scrambling.

That the AG value corresponding to the AG index indicates the index of the PCI feedback channel allocated to the terminal may be implemented by using an AG table. The following is specifically included: In the AG table, meanings of AG values corresponding to a part of AG indexes are modified as indexes of PCI feedback channels, and the others are still normal AG values. In addition, a special AG value may also be added in the AG table, where the special AG value is used to indicate that when no available PCI feedback channel exists, the base station prohibits the terminal from using the UL CLTD. For example, a meaning of AG value = ZERO_GRANT (zero grant) or AG index = 0 is modified as UL CLTD not available (UL CLTD not available). The UL CLTD is mainly applied to a situation in which transmit power of a cell edge or the terminal is limited, and at this time, the AG value generally cannot reach a maximum value in the AG table. Therefore, it may be considered to change AG indexes 26-31 to indexes 0-5 of corresponding PCI feedback channels.

Further, the E-AGCH may further indicate that AG information currently sent includes allocation information of the PCI feedback channel, so as to enable the terminal to distinguish whether current AG information is allocating a PCI feedback channel or allocating a grant value, so that the terminal learns that the current AG information is AG information for allocating a PCI feedback channel.

Manner 2: After the base station receives a UL CLTD capability indication reported by the terminal, when collision detection succeeds, and when an E-AGCH is sent or after the E-AGCH is sent, the base station sends an HS-SCCH (High-Speed shared control channel, high-speed shared control channel) command if the base station stores information about an H (High-Speed Downlink Shared Channel, high-speed downlink shared channel)-RNTI corresponding to the E-RNTI, where the HS-SCCH command carries the index of the PCI feedback channel allocated to the terminal.

In another embodiment of the present invention, if a current base station does not store information about an H-RNTI corresponding to an E-RNTI, the E-RNTI or a U-RNTI may be used when an HS-SCCH command is sent, so as to perform CRC scrambling, thereby ensuring that a UE parses out its own E-RNTI on an HS-SCCH by CRC check.

107: The terminal intercepts a corresponding PCI feedback channel according to the configuration information of the PCI feedback channel, reads a PCI from the PCI feedback channel, and sends data according to the PCI in a UL CLTD manner.

The configuration information of the PCI feedback channel may be: the index of the PCI feedback channel allocated to the UE, where the index is indicated by the AG value corresponding to the AG index; or the index of the PCI feedback channel allocated to the UE, where the index is carried in the HS-SCCH command; or may be the channel code and the symbol offset of the PCI feedback channel.

In another embodiment of the present invention, after receiving the configuration information of the PCI feedback channel, the terminal may carry an acknowledgment indication of the received configuration information of the PCI feedback channel in a subsequent uplink data packet.

In another embodiment of the present invention, before receiving the PCI feedback channel allocated to the terminal, the terminal does not send data according to a UL CLTD manner all the time.

The embodiment provides a method for configuring a PCI feedback channel; it is not necessary to pre-configure a PCI feedback channel for common E-DCH resource, and instead, a base station controller allocates the PCI feedback channel; and when confirming that a terminal has a UL CLTD capability, a base station dynamically allocates a PCI feedback channel to the terminal, thereby saving downlink code resource.

As shown in FIG. 2-a, another embodiment of the present invention provides a method for configuring a PCI feedback channel. The method includes:

S31: A base station controller configures common E-DCH resource and a PCI feedback channel for a terminal.

S32: The base station controller adds the common E-DCH resource and configuration information of the PCI feedback channel into system broadcast information, and broadcasts the system broadcast information to the terminal.

The present invention provides, by using the foregoing solution, a method for configuring a PCI feedback channel. The configuration information of the PCI feedback channel specifically includes: a channel code and a symbol offset of the PCI feedback channel; or, a symbol offset and mapping relationship between the PCI feedback channel and an F-DPCH in the common E-DCH resource, which are separately described in the following.

As shown in FIG. 2-b, another embodiment of the present invention provides a method for configuring a PCI feedback channel. The method includes:

201: A base station controller configures common E-DCH resource for a cell and configures configuration information of a PCI feedback channel for the common E-DCH resource, where the configuration information of the PCI feedback channel includes: a channel code and a symbol offset (Soffset) of the PCI feedback channel.

The base station controller may configure one or more sets of common E-DCH resource. For example, 32 sets can be configured at most. With the development of technologies, more sets can further be configured. This is not limited in the present invention.

202: The base station controller adds the common E-DCH resource and the configuration information of the PCI feedback channel into system broadcast information.

In another embodiment of the present invention, the base station controller may further add the common E-DCH resource to the system broadcast information.

The system broadcast information may be a SIB5 (System Information Block, system information block) or another SIB. A SIB5 is used as an example, and the base station controller may add the common E-DCH resource and the configuration information of the PCI feedback channel thereof to a Common E-DCH system info (common enhanced dedicated channel system information) cell in the SIB5.

203: The base station controller broadcasts the system broadcast information to a terminal.

For example, the base station controller sends the system broadcast information to a base station, and the base station broadcasts the system broadcast information to the terminal.

204: The terminal reads the system broadcast information.

Further, the terminal may further store the configuration information of the PCI feedback channel.

205: In a random access interaction process between the terminal and the base station, the base station allocates the PCI feedback channel to the terminal.

Specifically, the base station allocates the PCI feedback channel to the terminal over an E-AICH or an AICH. For example, the base station sends a common E-DCH resource number to the terminal over the E-AICH or the AICH, and the terminal determines a corresponding PCI feedback channel according to the common E-DCH resource number.

Alternatively, the base station directly sends the configuration information of the PCI feedback channel to the terminal over the E-AICH or the AICH, so that the terminal is capable of learning the PCI feedback channel allocated by the base station to the terminal.

206: The terminal sends uplink data to the base station and carries a UL CLTD capability in header information of the uplink data.

A method for adding the UL CLTD capability may be: for example, defining a special logical channel identifier (LrCH ID) number to indicate a UL CLTD capability of the terminal; or, defining a special logical channel identifier (LrCH ID) number to indicate that a UL CLTD capability of the terminal is carried in a reserve bit (reserve bit) in a header of the uplink data, and configuring a specific value in the reserve bit to represent the UL CLTD capability of the terminal.

The uplink data may be a MAC PDU.

207: After receiving the uplink data sent by the terminal, the base station determines, according to the uplink data, whether the terminal has the UL CLTD capability; and if the terminal has the UL CLTD capability, the base station sends AG information whose mask is an E-RNTI of the terminal to the terminal, and sends data to the terminal over the determined PCI feedback channel.

The determined PCI feedback channel is a PCI feedback channel corresponding to the common E-DCH resource number that is sent by the base station to the terminal.

208: After receiving the AG information whose mask is its own E-RNTI, the terminal intercepts the determined PCI feedback channel immediately or at a preset delayed moment, reads a PCI from the determined PCI feedback channel, and sends data according to the PCI in a UL CLTD manner.

The embodiment provides a method for configuring a PCI feedback channel. The configuration method is simple and easy to implement, which improves only RRC signaling and has the least impact on L1 and L2. However, a part of terminals that use common E-DCH resource do not support a UL CLTD. This part of terminals obtain PCI feedback channels but cannot use the PCI feedback channels, which causes a waste of downlink code resource. In addition, the common E-DCH resource carry a PCI feedback channel. If there are 32 sets of common E-DCH resource, a channel code of one PCI feedback channel occupies 8 bits, and one symbol offset occupies 4 bits, a SIB5 needs to add (4 + 8) bit $\times$ 32 = 384 bits, so that a length of the SIB5 becomes too large. This increases time for a terminal to read system broadcast information, and increases an access delay of the terminal.

As shown in FIG. 2-c, another embodiment of the present invention provides a method for configuring a PCI feedback channel. The method includes:

301: A radio network controller configures common E-DCH resource for a cell, configures mapping relationship between a channel code of a PCI feedback channel and an F-DPCH in the common E-DCH resource, and takes the correspondence and a symbol offset as configuration information of the PCI feedback channel.

The radio network controller may configure one or more sets of common E-DCH resource. Currently, 32 sets can be configured at most.

The embodiment provides three methods for configuring the correspondence:

Alt 1) Set that the PCI feedback channel and the F-DPCH use a same channelization code, and set that the PCI feedback channel and the F-DPCH use different symbol offsets, so as to distinguish the PCI feedback channel from the F-DPCH.

Alt 2) Set that the PCI feedback channel uses a channelization code that has correspondence to the F-DPCH, and set that the PCI feedback channel and the F-DPCH use a same symbol offset.

Mapping relationship between the channelization code used by the PCI feedback channel and a channelization code used by the F-DPCH is set to:

$$\text{F-PCICH Code number} = \text{F-DPCH Code number} + M,$$

where, M indicates the number of available F-DPCH channel codes configured by the radio network controller for the cell, F-PCICH Code number represents the channelization code used by the PCI feedback channel, and F-DPCH Code number represents the channelization code used by the F-DPCH.

Alt 3) Set that the PCI feedback channel uses a channelization code that has correspondence to the F-DPCH, and set that the PCI feedback channel uses a symbol offset that has correspondence to the F-DPCH.

For mapping relationship between the channelization code used by the PCI feedback channel and a channelization code used by the F-DPCH, reference may be made to Alt 2), and therefore no further details are provided herein.

Using, by the PCI feedback channel, the symbol offset that has correspondence to the F-DPCH may specifically be adding, based on a symbol offset of the F-DPCH, a preset offset value N, so as to obtain the symbol offset of the PCI feedback channel. A formula is expressed as follows:

$$\text{Soffset of F-PCICH} = (\text{Soffset of F-DPCH} + N) \bmod 10,$$

where, Soffset of F-PCICH represents the symbol offset of the PCI feedback channel, Soffset of F-DPCH represents the symbol offset of the F-DPCH, N indicates the offset value, and 10 indicates the number of timeslots.

302: The radio network controller adds the common E-DCH resource and the configuration information of the PCI feedback channel into system broadcast information.

In another embodiment of the present invention, the radio network controller may further add the common E-DCH resource to the system broadcast information.

The system broadcast information may be a SIB5 or another SIB. A SIB5 is used as an example, and the radio network controller may add the common E-DCH resource and the configuration information of the PCI feedback channel thereof to a Common E-DCH system info cell in the SIB5.

303: The radio network controller broadcasts the system broadcast information to a terminal.

304: The terminal reads the system broadcast information.

Further, the terminal may further store the configuration information of the PCI feedback channel.

305: In a random access interaction process between the terminal and a base station, the base station allocates the PCI feedback channel to the terminal.

Specifically, the base station allocates the PCI feedback channel to the terminal over an E-AICH or an AICH. For example, the base station sends a common E-DCH resource number to the terminal over the E-AICH or the AICH, and the terminal determines a corresponding PCI feedback channel according to the common E-DCH resource number.

Alternatively, the base station directly sends the configuration information of the PCI feedback channel to the terminal over the E-AICH or the AICH, so that the terminal is capable of learning the PCI feedback channel allocated by the base station to the terminal.

306: The terminal sends uplink data to the base station and carries a UL CLTD capability in header information of the uplink data.

A method for adding the UL CLTD capability may be: for example, defining a special logical channel identifier (LrCH ID) number to indicate a UL CLTD capability of the terminal; or, defining a special logical channel identifier (LrCH ID) number to indicate that a UL CLTD capability of the terminal is carried in a reserve bit (reserve bit) in a header of the uplink data, and configuring a specific value in the reserve bit to represent the UL CLTD capability of the terminal.

The uplink data may be a MAC PDU.

307: After receiving the uplink data sent by the terminal, the base station determines, according to the uplink data, whether the terminal has the UL CLTD capability; and if the terminal has the UL CLTD capability, the base station sends AG information whose mask is an E-RNTI of the terminal to the terminal, and sends data to the terminal over the determined PCI feedback channel.

The determined PCI feedback channel is a PCI feedback channel corresponding to the common E-DCH resource number that is sent by the base station to the terminal.

308: After receiving the AG information whose mask is its own E-RNTI, the terminal intercepts the determined PCI feedback channel immediately or at a preset delayed moment, reads a PCI from the determined PCI feedback channel, and sends data according to the PCI in a UL CLTD manner.

The embodiment provides a method for configuring a PCI feedback channel. According to this configuration method, because multiple sets of common E-DCH resource correspond to configuration of one PCI feedback channel, an increase in a length of system broadcast information is relatively small, and an impact on the length of the system broadcast information is relatively little. However, a part of terminals that use the common E-DCH resource do not support a UL CLTD, and this part of terminals obtain PCI feedback channels but cannot use the PCI feedback channels, which causes a waste of downlink code resource.

As shown in FIG. 3, another embodiment of the present invention provides a base station, including: an acquiring module 401, a configuring module 402, and a sending module 403.

The acquiring module 401 is configured to acquire a precoding control indication (PCI) feedback channel(s) configured by a base station controller.

The configuring module 402 is configured to select a PCI feedback channel from the configured PCI feedback channel(s) according to an uplink closed-loop transmit diversity (UL CLTD) capability reported by a terminal.

The sending module 403 is configured to send configuration information of the selected PCI feedback channel to the terminal.

The UL CLTD capability is: when the terminal supports a UL CLTD, reporting the UL CLTD capability to the base station by carrying the UL CLTD capability in a header of a Media Access Control (MAC) protocol data unit (PDU).

The acquiring module 401 is specifically configured to:

receive system broadcast information sent by the base station controller, where the system broadcast information includes: a PCI feedback channel configured by the base station controller for a terminal in a cell forward access channel (CELL_FACH) state in a cell.

In one aspect, the sending module 403 is specifically configured to:

send an enhanced dedicated channel absolute grant channel (E-AGCH) to the terminal, where the E-AGCH carries an absolute grant (AG) index, and an AG value corresponding to the AG index indicates an index of the selected PCI feedback channel.

That the AG value corresponding to the AG index indicates the index of the PCI feedback channel allocated to the terminal may be implemented by using an AG table. The following is specifically included: In the AG table, meanings of AG values corresponding to a part of AG indexes are modified as indexes of PCI feedback channels, and the others are still normal AG values.

Further, the AG value corresponding to the AG index further indicates that when no available PCI feedback channel exists currently, the base station prohibits the terminal from using the UL CLTD.

Further, the E-AGCH may further indicate that AG information currently sent includes allocation information of the PCI feedback channel.

In another aspect, the sending module 403 is specifically configured to:

when the base station sends an E-AGCH or after the base station sends an E-AGCH, the base station sends a high-speed shared control channel (HS-SCCH) command if the base station stores information about a high-speed downlink shared channel radio network temporary identifier (H-RNTI) of the terminal, where the HS-SCCH command carries the index of the selected PCI feedback channel.

The configuration information of the selected PCI feedback channel includes:

a channel code and a symbol offset of the PCI feedback channel;
or,

the index of the PCI feedback channel.

Configuration of a PCI feedback channel is implemented in the embodiment; it is not necessary to pre-configure the PCI feedback channel for common E-DCH resource, and instead, a base station controller allocates the PCI feedback channel; and when confirming that a terminal has a UL CLTD capability, a base station dynamically allocates a PCI feedback channel to the terminal, thereby saving downlink code resource.

As shown in FIG. 4, another embodiment of the present invention provides a terminal, including: a sending module 501 and a receiving module 502.

The sending module 501 is configured to report an uplink closed-loop transmit diversity (UL CLTD) capability to a base station, so that the base station selects, according to the UL CLTD capability, a PCI feedback channel from a precoding control indication (PCI) feedback channel(s) configured by a base station controller.

The receiving module 502 is configured to receive configuration information of the selected PCI feedback channel, where the configuration information is sent by the base station.

The sending module 501 is specifically configured to: when the terminal supports a UL CLTD, report the UL CLTD capability to the base station by carrying the UL CLTD capability in a header of a Media Access Control (MAC) protocol data unit (PDU).

The receiving module 502 is specifically configured to: receive an enhanced dedicated channel absolute grant channel (E-AGCH) sent by the base station, where the E-AGCH carries an absolute grant (AG) index, and an AG value corresponding to the AG index indicates an index of the selected PCI feedback channel.

Further, the E-AGCH may further indicate that AG information currently sent includes allocation information of the PCI feedback channel.

The receiving module 502 is specifically configured to: receive a high-speed shared control channel (HS-SCCH) command sent by the base station, where the HS-SCCH command carries the index of the selected PCI feedback channel.

Further, the receiving module 502 is further configured to: receive system broadcast information broadcast by the base station controller, where the system broadcast information includes: a PCI feedback channel configured by the base station controller for a terminal in a cell forward access channel (CELL_FACH) state in a cell.

After the configuration information of the selected PCI feedback channel is received, where the configuration information is sent by the base station, the sending module 501 is further configured to: intercept a corresponding PCI feedback channel according to the configuration information of the selected PCI feedback channel, read a PCI from the PCI feedback channel, and send data according to the PCI in a UL CLTD manner.

The configuration information of the selected PCI feedback channel specifically includes:

a channel code and a symbol offset of the PCI feedback channel;
or,

the index of the PCI feedback channel.

Configuration of a PCI feedback channel is implemented in the embodiment; it is not necessary to pre-configure the PCI feedback channel for common E-DCH resource, and instead, a base station controller allocates the PCI feedback channel; and when confirming that a terminal has a UL CLTD capability, a base station dynamically allocates a PCI feedback channel to the terminal, thereby saving downlink code resource.

As shown in FIG. 5, another embodiment of the present invention provides a base station controller, including: a configuring module 601 and a sending module 602.

The configuring module 601 is configured to configure common enhanced dedicated channel (E-DCH) resource and a precoding control indication (PCI) feedback channel for a terminal.

The sending module 602 is configured to add the common E-DCH resource and configuration information of the PCI feedback channel into system broadcast information, and broadcast the system broadcast information to the terminal.

When configuring the precoding control indication (PCI) feedback channel for the terminal, the configuring module 601 is specifically configured to:

a first type: configure the configuration information of the PCI feedback channel for the common E-DCH resource, where the configuration information of the PCI feedback channel includes: a channel code and a symbol offset of the PCI feedback channel;

or,

a second type: configure mapping relationship between the PCI feedback channel and a fractional dedicated physical channel (F-DPCH) in the common E-DCH resource, and take the correspondence and a symbol offset as the configuration information of the PCI feedback channel.

When configuring the mapping relationship between the PCI feedback channel and the fractional dedicated physical channel (F-DPCH) in the common E-DCH resource, the configuring module 601 is specifically configured to:

set that the PCI feedback channel and the F-DPCH use a same channelization code, and set that the PCI feedback channel and the F-DPCH use different symbol offsets;

or,

set that the PCI feedback channel uses a channelization code that has correspondence to the F-DPCH, and set that the PCI feedback channel and the F-DPCH use a same symbol offset;

or,

set that the PCI feedback channel uses a channelization code that has correspondence to the F-DPCH, and set that the PCI feedback channel uses a symbol offset that has correspondence to the F-DPCH.

Configuration of a PCI feedback channel is implemented in the embodiment. The configuration method of the first type is simple and easy to implement, which improves only RRC signaling and has the least impact on L1 and L2. However, a part of terminals that use common E-DCH resource do not support a UL CLTD. This part of terminals obtain PCI feedback channels but cannot use the PCI feedback channels, which causes a waste of downlink code resource. In addition, each set of common E-DCH resource carries one PCI feedback channel. If there are 32 sets of common E-DCH resource, a channel code of one PCI feedback channel occupies 8 bits, and one symbol offset occupies 4 bits, a SIB5 needs to add (4 + 8) bit $\times$ 32 = 384 bits, so that a length of the SIB5 becomes too large. This increases time for a terminal to read system broadcast information, and increases an access delay of the terminal. In the configuration method of the second type, because multiple sets of common E-DCH resource correspond to configuration of one PCI feedback channel, an increase in a length of the system broadcast information is relatively small, and an impact on the length of the system broadcast information is relatively little. However, a part of UEs that use the common E-DCH resource do not support the UL CLTD. This part of UEs obtain the PCI feedback channels but cannot use the PCI feedback channels, which causes the waste of downlink code resource.

As shown in FIG. 6, another embodiment of the present invention provides a terminal, including: a receiving module 701.

The receiving module 701 is configured to receive system broadcast information broadcast by a base station controller, where the system broadcast information carries common E-DCH resource and configuration information of a PCI feedback channel, and the common E-DCH resource and the PCI feedback channel are configured by the base station controller for the terminal.

The configuration information of the PCI feedback channel specifically includes:

a first type: a channel code and a symbol offset of the PCI feedback channel;
or,

a second type: a symbol offset and mapping relationship between the PCI feedback channel and a fractional dedicated physical channel (F-DPCH) in the common E-DCH resource.

The mapping relationship between the PCI feedback channel and the fractional dedicated physical channel (F-DPCH) in the common E-DCH resource specifically includes the following:

the PCI feedback channel and the F-DPCH use a same channelization code, and the PCI feedback channel and the F-DPCH use different symbol offsets;
or,

the PCI feedback channel uses a channelization code that has correspondence to the F-DPCH, and the PCI feedback channel and the F-DPCH use a same symbol offset;
or,

the PCI feedback channel uses a channelization code that has correspondence to the F-DPCH, and the PCI feedback channel uses a symbol offset that has correspondence to the F-DPCH.

Further, after receiving the system broadcast information broadcast by the base station controller, the receiving module 701 is further configured to: receive a common E-DCH resource number over an enhanced acknowledgment indicator channel (E-AICH) or an acknowledgment indicator channel (AICH), and determine a corresponding PCI feedback channel according to the common E-DCH resource number.

The terminal further includes: a sending module, configured to send uplink data to the base station after the corresponding PCI feedback channel is determined according to the common E-DCH resource number and carry a UL CLTD capability in header information of the uplink data.

The carrying a UL CLTD capability in header information of the uplink data specifically includes:

defining a logical channel identifier number in the header information of the uplink data to indicate a UL CLTD capability of the terminal;
or,

defining a logical channel identifier number in the header information of the uplink data to indicate that a UL CLTD capability of the terminal is carried in a reserve bit in a header of the uplink data, and configuring a specific value in the reserve bit in the header of the uplink data to represent the UL CLTD capability of the terminal.

Further, after sending the uplink data to the base station, the sending module is further configured to: after absolute grant (AG) information whose mask is an enhanced dedicated channel radio network temporary identifier (E-RNTI) of the terminal is received, intercept the determined PCI feedback channel, read a PCI from the determined PCI feedback channel, and send data according to the PCI in a UL CLTD manner.

Configuration of a PCI feedback channel is implemented in the embodiment. The configuration method of the first type is simple and easy to implement, which improves only RRC signaling and has the least impact on L1 and L2. However, a part of terminals that use common E-DCH resource do not support a UL CLTD. This part of terminals obtain PCI feedback channels but cannot use the PCI feedback channels, which causes a waste of downlink code resource. In addition, each set of common E-DCH resource carries one PCI feedback channel. If there are 32 sets of common E-DCH resource, a channel code of one PCI feedback channel occupies 8 bits, and one symbol offset occupies 4 bits, a SIB5 needs to add (4 + 8) bit $\times$ 32 = 384 bits, so that a length of the SIB5 becomes too large. This increases time for a terminal to read system broadcast information, and increases an access delay of the terminal. In the configuration method of the second type, because multiple sets of common E-DCH resource correspond to configuration of one PCI feedback channel, an increase in a length of the system broadcast information is relatively small, and an impact on the length of the system broadcast information is relatively little. However, a part of UEs that use the common E-DCH resource do not support the UL CLTD. This part of UEs obtain the PCI feedback channels but cannot use the PCI feedback channels, which causes the waste of downlink code resource.

As shown in FIG. 7, another embodiment of the present invention provides a base station, including: a configuring module 801, a receiving module 802, a determining module 803, and a sending module 804.

The configuring module 801 is configured to allocate a precoding control indication (PCI) feedback channel to a terminal over an enhanced acknowledgment indicator channel (E-AICH) or an acknowledgment indicator channel (AICH).

The receiving module 802 is configured to receive uplink data sent by the terminal.

The determining module 803 is configured to determine, according to the uplink data, whether the terminal has an uplink closed-loop transmit diversity (UL CLTD) capability.

The sending module 804 is configured to: if the terminal has the UL CLTD capability, send absolute grant (AG) information whose mask is an enhanced dedicated channel radio network temporary identifier (E-RNTI) of the terminal to the terminal, and send data to the terminal over the PCI feedback channel.

The configuring module 801 is specifically configured to send a common E-DCH resource number to the terminal over the E-AICH or the AICH, so that the terminal determines a corresponding PCI feedback channel according to the common E-DCH resource number; or, directly send configuration information of the PCI feedback channel to the terminal over the E-AICH or the AICH, so that the terminal is capable of learning the PCI feedback channel allocated by the base station to the terminal.

The determining module 803 is specifically configured to:

determine, according to a logical channel identifier number carried in header information of the uplink data, whether the terminal has the UL CLTD capability;
or,

read a reserve bit in header information of the uplink data according to a logical channel identifier number carried in the header information, and determine, according to whether the reserve bit is a preset value, whether the terminal has the UL CLTD capability.

The beneficial effect of the technical solution provided in the embodiment of the present invention is: implementing a method for configuring a precoding control indication feedback channel.

It may be clearly understood by persons skilled in the art that, for the purpose of convenient and brief description, for a detailed working process of the foregoing system, apparatus, and unit, reference may be made to a corresponding process in the foregoing method embodiments, and therefore no further details are provided herein.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and the parts displayed as units may or may not be physical units, may be located in one position, or may be distributed on a plurality of network units. A part of or all of the units may be selected according to actual needs to achieve the objectives of the solutions of the embodiments.

In addition, functional units in the embodiments of the present invention may be integrated into one processing unit, or each of the units may exist alone physically, or two or more units may be integrated into one unit. The integrated units may be implemented in a form of hardware, or may be implemented in a form of a software functional unit.

When the integrated units are implemented in a form of a software functional unit and sold or used as an independent product, the integrated units may be stored in a computer-readable storage medium. Based on such an understanding, the technical solutions of the present invention essentially, or the part contributing to the prior art, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods described in the embodiments of the present invention. The foregoing storage medium includes: any mediums that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, as long as such modifications or replacements do not cause the essence of corresponding technical solutions to depart from the spirit and scope of the technical solutions of the embodiments of the present invention.

**Claims**

1. A method for configuring a precoding control indication feedback channel, comprising:

   acquiring, by a base station, a precoding control indication (PCI) feedback channel(s) configured by a base station controller;
   selecting, by the base station, a PCI feedback channel from the configured PCI feedback channel(s) according to an uplink closed-loop transmit diversity (UL CLTD) capability reported by a terminal; and
   sending, by the base station, configuration information of the selected PCI feedback channel to the terminal.

2. The method according to claim 1, wherein the UL CLTD capability is: when the terminal supports a UL CLTD, the UL CLTD capability is reported by the terminal to the base station by carrying the UL CLTD capability in a header of a Media Access Control (MAC) protocol data unit (PDU).

3. The method according to claim 1, wherein the acquiring, by the base station, the PCI feedback channel(s) configured by the base station controller specifically comprises:

   receiving, by the base station, a message sent by the base station controller, wherein the message comprises: a PCI feedback channel configured by the base station controller for a terminal in a cell forward access channel (CELL_FACH) state in a cell.

4. The method according to claim 1, wherein the sending, by the base station, the configuration information of the selected PCI feedback channel to the terminal specifically comprises:

   sending, by the base station, an enhanced dedicated channel absolute grant channel (E-AGCH) to the terminal, wherein the E-AGCH carries an absolute grant (AG) index, and an AG value corresponding to the AG index indicates an index of the selected PCI feedback channel.

5. The method according to claim 4, wherein the AG value corresponding to the AG index further indicates that when no available PCI feedback channel exists currently, the base station prohibits the terminal from using a UL CLTD.

6. The method according to claim 4, wherein the E-AGCH further indicates that AG information currently sent comprises allocation information of the PCI feedback channel.

7. The method according to claim 1, wherein the sending, by the base station, the configuration information of the selected PCI feedback channel to the terminal specifically comprises:

   when the base station sends an E-AGCH or after the base station sends an E-AGCH, sending, by the base station, a high-speed shared control channel (HS-SCCH) command if the base station stores information about a high-speed downlink shared channel radio network temporary identifier (H-RNTI) of the terminal, wherein the HS-SCCH command carries an index of the selected PCI feedback channel.

8. The method according to any one of claims 1-7, wherein the configuration information of the selected PCI feedback channel comprises:

   a channel code and a symbol offset of the PCI feedback channel;
   or,
   the index of the PCI feedback channel.

9. A method for configuring a precoding control indication feedback channel, comprising:

   reporting, by a terminal, an uplink closed-loop transmit diversity (UL CLTD) capability to a base station, so that the base station selects, according to the UL CLTD capability, a PCI feedback channel from a precoding control indication (PCI) feedback channel(s) configured by a base station controller; and
   receiving, by the terminal, configuration information of the selected PCI feedback channel, wherein the configuration information is sent by the base station.

10. The method according to claim 9, wherein the reporting, by the terminal, the UL CLTD capability to the base station specifically comprises:

when the terminal supports a UL CLTD, reporting the UL CLTD capability to the base station by carrying the UL CLTD capability in a header of a Media Access Control (MAC) protocol data unit (PDU).

11. The method according to claim 9, wherein the receiving, by the terminal, the configuration information of the selected PCI feedback channel, wherein the configuration information is sent by the base station specifically comprises:

receiving, by the terminal, an enhanced dedicated channel absolute grant channel (E-AGCH) sent by the base station, wherein the E-AGCH carries an absolute grant (AG) index, and an AG value corresponding to the AG index indicates an index of the selected PCI feedback channel.

12. The method according to claim 11, wherein the E-AGCH further indicates that AG information currently sent comprises allocation information of the PCI feedback channel.

13. The method according to claim 9, wherein the receiving, by the terminal, the configuration information of the selected PCI feedback channel, wherein the configuration information is sent by the base station specifically comprises:

receiving, by the terminal, a high-speed shared control channel (HS-SCCH) command sent by the base station, wherein the HS-SCCH command carries an index of the selected PCI feedback channel.

14. The method according to claim 9, further comprising:

receiving, by the terminal, system broadcast information broadcast by the base station controller, wherein the system broadcast information comprises: a PCI feedback channel configured by the base station controller for a terminal in a cell forward access channel (CELL_FACH) state in a cell.

15. The method according to claim 9, after the receiving, by the terminal, the configuration information of the selected PCI feedback channel, wherein the configuration information is sent by the base station, further comprising:

intercepting, by the terminal according to the configuration information of the selected PCI feedback channel, a corresponding PCI feedback channel, reading a PCI from the PCI feedback channel, and sending data according to the PCI in a UL CLTD manner.

16. The method according to any one of claims 9-15, wherein the configuration information of the selected PCI feedback channel specifically comprises:

a channel code and a symbol offset of the PCI feedback channel;
or,
the index of the PCI feedback channel.

17. A method for configuring a precoding control indication feedback channel, comprising:

configuring, by a base station controller, common enhanced dedicated channel (E-DCH) resource and a precoding control indication (PCI) feedback channel for a terminal; and
adding, by the base station controller, the common E-DCH resource and configuration information of the PCI feedback channel into system broadcast information, and broadcasting the system broadcast information to the terminal.

18. The method according to claim 17, wherein the configuring, by the base station controller, the PCI feedback channel for a terminal specifically comprises:

configuring, by the base station controller, the configuration information of the PCI feedback channel for the common E-DCH resource, wherein the configuration information of the PCI feedback channel comprises: a channel code and a symbol offset of the PCI feedback channel;

or,

configuring, by the base station controller, a mapping relationship between the PCI feedback channel and a fractional dedicated physical channel (F-DPCH) in the common E-DCH resource, and taking the correspondence and a symbol offset as the configuration information of the PCI feedback channel.

19. The method according to claim 18, wherein the configuring, by the base station controller, the mapping relationship between the PCI feedback channel and the F-DPCH in the common E-DCH resource specifically comprises:

configuring, by the base station controller, that the PCI feedback channel uses a same channelization code as that used by the F-DPCH, and configuring that the PCI feedback channel and the F-DPCH use different symbol offsets;
or,
configuring, by the base station controller, that the PCI feedback channel uses a channelization code that has correspondence to the F-DPCH, and configuring that the PCI feedback channel and the F-DPCH use a same symbol offset;
or,
configuring, by the base station controller, that the PCI feedback channel uses a channelization code that has correspondence to the F-DPCH, and configuring that the PCI feedback channel uses a symbol offset that has correspondence to the F-DPCH.

20. A method for configuring a precoding control indication feedback channel, comprising:

receiving, by a terminal, system broadcast information broadcast by a base station controller, wherein the system broadcast information carries common E-DCH resource and configuration information of a PCI feedback channel, and the common E-DCH resource and the PCI feedback channel are configured by the base station controller for the terminal.

21. The method according to claim 20, wherein the configuration information of the PCI feedback channel specifically comprises:

a channel code and a symbol offset of the PCI feedback channel;
or,
a symbol offset and mapping relationship between the PCI feedback channel and a fractional dedicated physical channel (F-DPCH) in the common E-DCH resource.

22. The method according to claim 21, wherein the mapping relationship between the PCI feedback channel and the F-DPCH in the common E-DCH resource specifically comprises the following:

the PCI feedback channel and the F-DPCH use a same channelization code, and the PCI feedback channel and the F-DPCH use different symbol offsets;
or,
the PCI feedback channel uses a channelization code that has correspondence to the F-DPCH, and the PCI feedback channel and the F-DPCH use a same symbol offset;
or,
the PCI feedback channel uses a channelization code that has correspondence to the F-DPCH, and the PCI feedback channel uses a symbol offset that has correspondence to the F-DPCH.

23. The method according to claim 20, after the receiving, by the terminal, the system broadcast information broadcast by the base station controller, further comprising:

receiving, by the terminal, a common E-DCH resource number over an enhanced acknowledgment indicator channel (E-AICH) or an acknowledgment indicator channel (AICH), and determining a corresponding PCI feedback channel according to the common E-DCH resource number.

24. The method according to claim 23, after the determining, by the terminal, the corresponding PCI feedback channel according to the common E-DCH resource number, further comprising:

sending, by the terminal, uplink data to the base station and carrying a UL CLTD capability in header information of the uplink data.

**25.** The method according to claim 24, wherein the carrying the UL CLTD capability in the header information of the uplink data specifically comprises:

defining a logical channel identifier number in the header information of the uplink data to indicate a UL CLTD capability of the terminal;
or,
defining a logical channel identifier number in the header information of the uplink data to indicate that a UL CLTD capability of the terminal is carried in a reserve bit in a header of the uplink data, and setting a specific value in the reserve bit in the header of the uplink data to represent the UL CLTD capability of the terminal.

**26.** The method according to claim 24, after the sending, by the terminal, the uplink data to the base station, further comprising:

after the terminal receives absolute grant (AG) information whose mask is an enhanced dedicated channel radio network temporary identifier (E-RNTI) of the terminal, intercepting the determined PCI feedback channel, reading a PCI from the determined PCI feedback channel, and sending data according to the PCI in a UL CLTD manner.

**27.** A method for configuring a precoding control indication feedback channel, comprising:

allocating, by a base station, a precoding control indication (PCI) feedback channel to a terminal over an enhanced acknowledgment indicator channel (E-AICH) or an acknowledgment indicator channel (AICH);
receiving, by the base station, uplink data sent by the terminal;
determining, by the base station according to the uplink data, whether the terminal has an uplink closed-loop transmit diversity (UL CLTD) capability; and
if the terminal has the UL CLTD capability, sending, by the base station, absolute grant (AG) information whose mask is an enhanced dedicated channel radio network temporary identifier (E-RNTI) of the terminal to the terminal, and sending data to the terminal over the PCI feedback channel.

**28.** The method according to claim 27, wherein the determining, by the base station according to the uplink data, whether the terminal has the UL CLTD capability specifically comprises:

determining, by the base station according to a logical channel identifier number carried in header information of the uplink data, whether the terminal has the UL CLTD capability;
or,
reading, by the base station, a reserve bit in header information of the uplink data according to a logical channel identifier number carried in the header information, and determining, according to whether the reserve bit is a preset value, whether the terminal has the UL CLTD capability.

**29.** A base station, comprising:

an acquiring module, configured to acquire a precoding control indication (PCI) feedback channel(s) configured by a base station controller;
a configuring module, configured to select a PCI feedback channel from the configured PCI feedback channel(s) according to an uplink closed-loop transmit diversity (UL CLTD) capability reported by a terminal; and
a sending module, configured to send configuration information of the selected PCI feedback channel to the terminal.

**30.** The base station according to claim 29, wherein the UL CLTD capability is: when the terminal supports a UL CLTD, the UL CLTD capability is reported by the terminal to the base station by carrying the UL CLTD capability in a header of a Media Access Control (MAC) protocol data unit (PDU).

**31.** The base station according to claim 29, wherein the acquiring module is specifically configured to:

receive system broadcast information sent by the base station controller, wherein the system broadcast information comprises: a PCI feedback channel configured by the base station controller for a terminal in a cell forward access channel (CELL_FACH) state in a cell.

32. The base station according to claim 29, wherein the sending module is specifically configured to:

send an enhanced dedicated channel absolute grant channel (E-AGCH) to the terminal, wherein the E-AGCH carries an absolute grant (AG) index, and an AG value corresponding to the AG index indicates an index of the selected PCI feedback channel.

33. The base station according to claim 32, wherein the AG value corresponding to the AG index further indicates that when no available PCI feedback channel exists currently, the base station prohibits the terminal from using a UL CLTD.

34. The base station according to claim 32, wherein the E-AGCH further indicates that AG information currently sent comprises allocation information of the PCI feedback channel.

35. The base station according to claim 29, wherein the sending module is specifically configured to:

when the base station sends an E-AGCH or after the base station sends an E-AGCH, the base station sends a high-speed shared control channel (HS-SCCH) command if the base station stores information about a high-speed downlink shared channel radio network temporary identifier (H-RNTI) of the terminal, wherein the HS-SCCH command carries an index of the selected PCI feedback channel.

36. The base station according to any one of claims 29-35, wherein the configuration information of the selected PCI feedback channel comprises:

a channel code and a symbol offset of the PCI feedback channel;
or,
the index of the PCI feedback channel.

37. A terminal, comprising:

a sending module, configured to report an uplink closed-loop transmit diversity (UL CLTD) capability to a base station, so that the base station selects, according to the UL CLTD capability, a PCI feedback channel from a precoding control indication (PCI) feedback channel(s) configured by a base station controller; and
a receiving module, configured to receive configuration information of the selected PCI feedback channel, wherein the configuration information is sent by the base station.

38. The terminal according to claim 37, wherein the sending module is specifically configured to:

when the terminal supports a UL CLTD, report the UL CLTD capability to the base station by carrying the UL CLTD capability in a header of a Media Access Control (MAC) protocol data unit (PDU).

39. The terminal according to claim 37, wherein the receiving module is specifically configured to:

receive an enhanced dedicated channel absolute grant channel (E-AGCH) sent by the base station, wherein the E-AGCH carries an absolute grant (AG) index, and an AG value corresponding to the AG index indicates an index of the selected PCI feedback channel.

40. The terminal according to claim 39, wherein the E-AGCH further indicates that AG information currently sent comprises allocation information of the PCI feedback channel.

41. The terminal according to claim 37, wherein the receiving module is specifically configured to:

receive a high-speed shared control channel (HS-SCCH) command sent by the base station, wherein the HS-SCCH command carries an index of the selected PCI feedback channel.

42. The terminal according to claim 37, wherein the receiving module is further configured to:

receive system broadcast information broadcast by the base station controller, wherein the system broadcast information comprises: a PCI feedback channel configured by the base station controller for a terminal in a cell forward access channel (CELL_FACH) state in a cell.

43. The terminal according to claim 37, wherein after the configuration information of the selected PCI feedback channel is received, wherein the configuration information is sent by the base station, the sending module is further configured to:

intercept a corresponding PCI feedback channel according to the configuration information of the selected PCI feedback channel, read a PCI from the PCI feedback channel, and send data according to the PCI in a UL CLTD manner.

44. The terminal according to claim 37, wherein the configuration information of the selected PCI feedback channel specifically comprises:

a channel code and a symbol offset of the PCI feedback channel;
or,
an index of the PCI feedback channel.

45. A base station controller, comprising:

a configuring module, configured to configure common enhanced dedicated channel (E-DCH) resource and a precoding control indication (PCI) feedback channel for a terminal; and
a sending module, configured to add the common E-DCH resource and configuration information of the PCI feedback channel into system broadcast information, and broadcast the system broadcast information to the terminal.

46. The base station controller according to claim 45, wherein when configuring the precoding control indication (PCI) feedback channel for the terminal, the configuring module is specifically configured to:

configure the configuration information of the PCI feedback channel for the common E-DCH resource, wherein the configuration information of the PCI feedback channel comprises: a channel code and a symbol offset of the PCI feedback channel;
or,
configure mapping relationship between the PCI feedback channel and a fractional dedicated physical channel (F-DPCH) in the common E-DCH resource, and take the correspondence and a symbol offset as the configuration information of the PCI feedback channel.

47. The base station controller according to claim 46, wherein when configuring the mapping relationship between the PCI feedback channel and the fractional dedicated physical channel (F-DPCH) in the common E-DCH resource, the configuring module is specifically configured to:

set that the PCI feedback channel and the F-DPCH use a same channelization code, and set that the PCI feedback channel and the F-DPCH use different symbol offsets;
or,
set that the PCI feedback channel uses a channelization code that has correspondence to the F-DPCH, and set that the PCI feedback channel and the F-DPCH use a same symbol offset;
or,
set that the PCI feedback channel uses a channelization code that has correspondence to the F-DPCH, and set that the PCI feedback channel uses a symbol offset that has correspondence to the F-DPCH.

48. A terminal, comprising:

a receiving module, configured to receive system broadcast information broadcast by a base station controller, wherein the system broadcast information carries common E-DCH resource and configuration information of a PCI feedback channel, and the common E-DCH resource and the PCI feedback channel are configured by the base station controller for the terminal.

**49.** The terminal according to claim 48, wherein the configuration information of the PCI feedback channel specifically comprises:

a channel code and a symbol offset of the PCI feedback channel;
or,
a symbol offset and mapping relationship between the PCI feedback channel and a fractional dedicated physical channel (F-DPCH) in the common E-DCH resource.

**50.** The terminal according to claim 48, wherein the mapping relationship between the PCI feedback channel and the fractional dedicated physical channel (F-DPCH) in the common E-DCH resource specifically comprises the following:

the PCI feedback channel and the F-DPCH use a same channelization code, and the PCI feedback channel and the F-DPCH use different symbol offsets;
or,
the PCI feedback channel uses a channelization code that has correspondence to the F-DPCH, and the PCI feedback channel and the F-DPCH use a same symbol offset;
or,
the PCI feedback channel uses a channelization code that has correspondence to the F-DPCH, and the PCI feedback channel uses a symbol offset that has correspondence to the F-DPCH.

**51.** The terminal according to claim 48, after receiving the system broadcast information broadcast by the base station controller, the receiving module is further configured to:

receive a common E-DCH resource number over an enhanced acknowledgment indicator channel (E-AICH) or an acknowledgment indicator channel (AICH), and determine a corresponding PCI feedback channel according to the common E-DCH resource number.

**52.** The terminal according to claim 51, further comprising:

a sending module, configured to send uplink data to a base station after the corresponding PCI feedback channel is determined according to the common E-DCH resource number and carry a UL CLTD capability in header information of the uplink data.

**53.** The terminal according to claim 52, wherein the carrying a UL CLTD capability in header information of the uplink data specifically comprises:

defining a logical channel identifier number in the header information of the uplink data to indicate a UL CLTD capability of the terminal;
or,
defining a logical channel identifier number in the header information of the uplink data to indicate that a UL CLTD capability of the terminal is carried in a reserve bit in a header of the uplink data, and setting a specific value in the reserve bit in the header of the uplink data to represent the UL CLTD capability of the terminal.

**54.** The terminal according to claim 52, wherein after sending the uplink data to the base station, the sending module is further configured to:

after absolute grant (AG) information whose mask is an enhanced dedicated channel radio network temporary identifier (E-RNTI) of the terminal is received, intercept the determined PCI feedback channel, read a PCI from the determined PCI feedback channel, and send data according to the PCI in a UL CLTD manner.

**55.** A base station, comprising:

a configuring module, configured to allocate a precoding control indication (PCI) feedback channel to a terminal over an enhanced acknowledgment indicator channel (E-AICH) or an acknowledgment indicator channel (AICH);
a receiving module, configured to receive uplink data sent by the terminal;
a determining module, configured to determine, according to the uplink data, whether the terminal has an uplink closed-loop transmit diversity (UL CLTD) capability; and
a sending module, configured to: if the terminal has the UL CLTD capability, send absolute grant (AG) information whose mask is an enhanced dedicated channel radio network temporary identifier (E-RNTI) of the terminal to the terminal, and send data to the terminal over the PCI feedback channel.

56. The base station according to claim 55, wherein the determining module is specifically configured to:

determine, according to a logical channel identifier number carried in header information of the uplink data, whether the terminal has the UL CLTD capability;
or,
read a reserve bit in header information of the uplink data according to a logical channel identifier number carried in the header information, and determine, according to whether the reserve bit is a preset value, whether the terminal has the UL CLTD capability.

| A base station acquires a precoding control indication (PCI) feedback channel configured by a base station controller | S11 |

↓

| The base station selects a PCI feedback channel from the configured PCI feedback channel according to a UL CLTD capability reported by a terminal | S12 |

↓

| The base station sends configuration information of the selected PCI feedback channel to the terminal | S13 |

FIG. 1-a

| A terminal reports a UL CLTD capability to a base station, so that the base station selects, according to the UL CLTD capability, a PCI feedback channel from a PCI feedback channel configured by a base station controller | S21 |

↓

| The terminal receives configuration information of the selected PCI feedback channel, where the configuration information is sent by the base station | S22 |

FIG. 1-b

| Terminal | Base station | Base station controller |
|---|---|---|

101: Send the common E-DCH resources and configuration information of the PCI feedback channel to the base station

Configure common E-DCH resources and a PCI feedback channel for a cell

102: The base station controller adds the common E-DCH resources and the configuration information of the PCI feedback channel to system broadcast information, and broadcasts the system broadcast information to the terminal

103: The terminal reads the common E-DCH resources and the configuration information of the PCI feedback channel from the system broadcast information, and initiates preamble access

104: The base station returns an E-AICH to the terminal

105: Add a UL CLTD capability

106: Send configuration information of the selected PCI feedback channel to the terminal

The base station selects, according to the UL CLTD capability reported by the terminal, a currently available PCI feedback channel from the PCI feedback channel configured by the base station controller

107: The terminal intercepts a corresponding PCI feedback channel according to the configuration information of the PCI feedback channel, reads a PCI from the PCI feedback channel, and sends data according to the PCI in a UL CLTD manner

FIG. 1-c

A base station controller configures common E-DCH resources and a PCI feedback channel for a terminal — S31

The base station controller adds the common E-DCH resources and configuration information of the PCI feedback channel to system broadcast information, and broadcasts the system broadcast information to the terminal — S32

FIG. 2-a

Terminal | Base station | Base station controller

201: The base station controller configures common E-DCH resources for a cell and configures configuration information of a PCI feedback channel for the common E-DCH resources

202: Add the common E-DCH resources and the configuration information of the PCI feedback channel to system broadcast information

203: The base station controller broadcasts the system broadcast information to the terminal

204: The terminal reads the system broadcast information

205: In a random access interaction process between the terminal and the base station, the base station allocates the PCI feedback channel to the terminal

206: The terminal sends uplink data to the base station and carries a UL CLTD capability in header information of the uplink data

207: If the terminal has the UL CLTD capability, the base station sends AG information whose mask is an E-RNTI of the terminal to the terminal, and sends data to the terminal over the determined PCI feedback channel

Determine, according to the uplink data, whether the terminal has the UL CLTD capability

208: After receiving the AG information whose mask is its own E-RNTI, the terminal intercepts the determined PCI feedback channel immediately or at a preset delayed moment, reads a PCI from the determined PCI feedback channel, and sends data according to the PCI in a UL CLTD manner

FIG. 2-b

| Terminal | Base station | Base station controller |
|---|---|---|

**301:** Configure common E-DCH resources for a cell, configure correspondence between a channel code of a PCI feedback channel and an F-DPCH in the common E-DCH resources, and take the correspondence and a symbol offset as configuration information of the PCI feedback channel

**302:** Add the common E-DCH resources and the configuration information of the PCI feedback channel to system broadcast information

**303:** The base station controller broadcasts the system broadcast information to the terminal

**304:** The terminal reads the system broadcast information

**305:** In a random access interaction process between the terminal and the base station, the base station allocates the PCI feedback channel to the terminal

**306:** The terminal sends uplink data to the base station and carries a UL CLTD capability in header information of the uplink data

**307:** If the terminal has the UL CLTD capability, the base station sends AG information whose mask is an E-RNTI of the terminal to the terminal, and sends data to the terminal over the determined PCI feedback channel

Determine, according to the uplink data, whether the terminal has the UL CLTD capability

**308:** After receiving the AG information whose mask is its own E-RNTI, the terminal intercepts the determined PCI feedback channel immediately or at a preset delayed moment, reads a PCI from the determined PCI feedback channel, and sends data according to the PCI in a UL CLTD manner

FIG. 2-c

| Acquiring module 401 |
|---|

| Configuring module 402 |
|---|

| Sending module 403 |
|---|

FIG. 3

Sending module 501

Receiving module 502

FIG. 4

Configuring module 601

Sending module 602

FIG. 5

Receiving module 701

FIG. 6

Receiving module 802

Determining module 803

Sending module 804

Configuring module 801

FIG. 7

# INTERNATIONAL SEARCH REPORT

| International application No. |
|---|
| PCT/CN2012/079007 |

## A. CLASSIFICATION OF SUBJECT MATTER

See the extra sheet

According to International Patent Classification (IPC) or to both national classification and IPC

## B. FIELDS SEARCHED

Minimum documentation searched (classification system followed by classification symbols)

IPC: H04L, H04Q, H04W

Documentation searched other than minimum documentation to the extent that such documents are included in the fields searched

Electronic data base consulted during the international search (name of data base and, where practicable, search terms used)

CNABS, CNTXT, VEN, CNKI, GOOGLE: PCI, PCICH, feedback, CLTD, precoding w control w indication, RNC, BSC, NodeB, BS, eNB, configuration, terminal, client, choos+, select+, DCH

## C. DOCUMENTS CONSIDERED TO BE RELEVANT

| Category* | Citation of document, with indication, where appropriate, of the relevant passages | Relevant to claim No. |
|---|---|---|
| Y | CN101114868A (DA TANG MOBILE COMMUNICATION EQUIP) 30 Jan. 2008(30.01.2008) see the claims, description, pages 13-16 | 1-6,8-12,14-16, 29-34, 36-40,42-44 |
| A | | 7, 13, 17-28, 35, 41, 45-56 |
| Y | WO2010127484A1(HUAWEI TECHNOLOGIES CO LTD) 11 Nov. 2010(11.11.2010) see the claims, description, pages 2-6 | 1-6, 8-12, 14-18, 20, 21, 29-34, 36-40, 42-46, 48, 49 |
| A | | 7, 13, 19, 22-28, 35, 41, 47, 50-56 |
| Y | CN101335979A(ZTE CORP) 31 Dec. 2008(31.12.2008) See the claims | 17, 18, 20, 21, 45, 46, 48, 49 |
| A | | 1-16, 19, 22-44, 47, 50-56 |

☐ Further documents are listed in the continuation of Box C.　　☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 16 Oct. 2012 (16.10.2012) | 01 Nov. 2012(01.11.2012) |

| Name and mailing address of the ISA State Intellectual Property Office of the P. R. China No. 6, Xitucheng Road, Jimenqiao Haidian District, Beijing 100088, China Facsimile No. (86-10)62019451 | Authorized officer PENG, Rui Telephone No. (86-10)62411220 |
|---|---|

Form PCT/ISA /210 (second sheet) (July 2009)

| INTERNATIONAL SEARCH REPORT | International application No. |
|---|---|
| | PCT/CN2012/079007 |

**Box No. II    Observations where certain claims were found unsearchable (Continuation of item 2 of first sheet)**

This international search report has not been established in respect of certain claims under Article 17(2)(a) for the following reasons:

1. ☐   Claims Nos.:
     because they relate to subject matter not required to be searched by this Authority, namely:

2. ☐   Claims Nos.:
     because they relate to parts of the international application that do not comply with the prescribed requirements to such an extent that no meaningful international search can be carried out, specifically:

3. ☐   Claims Nos.:
     because they are dependent claims and are not drafted in accordance with the second and third sentences of Rule 6.4(a).

**Box No. III   Observations where unity of invention is lacking (Continuation of item 3 of first sheet)**

This International Searching Authority found multiple inventions in this international application, as follows:

I: Claims 1 and 9 relate to a method for configuring precoding contorl indication feedback channel, wherein the base station selects one of PCI feedback channels configured by base station controller based on uplink closed-loop transmission diversity capability reported by the terminal. Claims 29 and 37 relate to the corresponding base station and terminal.
II: Claims 17 and 20 relate to a method for configuring precoding contorl indication feedback channel, wherein the base station controller configures E-DCH resources and PCI feedback channel, then broadcasts them to terminal by system broadcast information. Claims 45 and 48 relate to the corresponding base station controller and terminal.
III: Claim 27 relates to a method for configuring precoding contorl indication feedback channel, wherein the base station assigns PCI feedback channel to the terminal and, according to whether the terminal has uplink closed-loop transmission diversity capability, transmits absolute grant information to the terminal. Claim 55 relates to the corresponding base station.
These groups of claims don't involve the same or corresponding special technical features. Therefore the application does not meet the requirements of unity of invention as defined in Rules 13.1 and 13.2 PCT.

1. ☐   As all required additional search fees were timely paid by the applicant, this international search report covers all searchable claims.

2. ☒   As all searchable claims could be searched without effort justifying additional fees, this Authority did not invite payment of additional fees.

3. ☐   As only some of the required additional search fees were timely paid by the applicant, this international search report covers only those claims for which fees were paid, specifically claims Nos.:

4. ☐   No required additional search fees were timely paid by the applicant. Consequently, this international search report is restricted to the invention first mentioned in the claims; it is covered by claims Nos.:

**Remark on protest**       ☐   The additional search fees were accompanied by the applicant's protest and, where applicable, the payment of a protest fee.

☐   The additional search fees were accompanied by the applicant's protest but the applicable protest fee was not paid within the time limit specified in the invitation.

☐   No protest accompanied the payment of additional search fees.

Form PCT/ISA/210 (continuation of first sheet (2)) (July 2009)

## INTERNATIONAL SEARCH REPORT
### Information on patent family members

International application No.

PCT/CN2012/079007

| Patent Documents referred in the Report | Publication Date | Patent Family | Publication Date |
|---|---|---|---|
| CN101114868A | 30.01.2008 | CN101114868B | 23.11.2011 |
| WO2010127484A1 | 11.11.2010 | CN102077625A | 25.05.2011 |
| | | MX2011011810A1 | 31.01.2012 |
| CN101335979A | 31.12.2008 | CN101335979B | 29.02.2012 |

Form PCT/ISA /210 (patent family annex) (July 2009)

# INTERNATIONAL SEARCH REPORT

| International application No. |
|---|
| PCT/CN2012/079007 |

**A. CLASSIFICATION OF SUBJECT MATTER**

H04W72/04 (2009.01) i

H04W8/22 (2009.01) i

According to International Patent Classification (IPC) or to both national classification and IPC

Form PCT/ISA /210 (extra sheet) (July 2009)

**EP 2 731 391 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201110229754